# EUROPÄISCHE PATENTSCHRIFT

(11) **EP 3 427 836 B1**
(45) Veröffentlichungstag und Bekanntmachung des Hinweises auf die Patenterteilung: **17.02.2021**
(21) Anmeldenummer: 18182339.4
(22) Anmeldetag: 09.07.2018
(51) Int. Cl.: B05B 1/26, B05B 1/30, B05B 12/08, F16K 15/14

(54) **DÜSE ZUM VERSPRÜHEN VON FLÜSSIGEN MEDIEN**
NOZZLE FOR SPRAYING LIQUID MEDIA
BUSE DE PULVÉRISATION DE MATERIAUX LIQUIDES

(30) Priorität: 14.07.2017 DE 102017212139
(43) Veröffentlichungstag der Anmeldung: 16.01.2019
(73) Patentinhaber: Lechler GmbH, 72555 Metzingen (DE)
(72) Erfinder: Engels, Nathan, 72764 Reutlingen (DE); Heinkel, Robert, 72581 Dettingen/Erms (DE)
(74) Vertreter: Patentanwälte Ruff, Wilhelm, Beier, Dauster & Partner mbB

(56) Entgegenhaltungen:
- DE-A1- 2 540 454
- DE-A1-102005 062 535
- DE-C2- 3 307 835
- DE-U- 8 203 649

## Beschreibung

Die Erfindung betrifft eine Düse zum Versprühen von flüssigen Medien, insbesondere Pflanzenschutzmittel und Flüssigdünger, mit einem Gehäuse, wobei das Gehäuse wenigstens einen Flüssigkeitseinlass, eine Austrittskammer und wenigstens eine mit der Austrittskammer in Strömungsverbindung stehende Austrittsöffnung aufweist.

Düsen werden in der Regel mit einem flüssigen Medium mit konstantem Druck beaufschlagt. Bei einem vordefinierten Druck ergibt sich dann eine vordefinierte Volumenmenge an flüssigem Medium, die von der Düse ausgegeben wird. In der Landwirtschaft ist es oft sinnvoll, unterschiedliche Mengen an flüssigem Medium auszugeben. Beispielsweise wird durch geeignete Sensoren oder Beobachtung festgestellt, dass ein Teil eines Felds mehr Flüssigdünger, ein anderer Teil hingegen weniger Flüssigdünger benötigt. Bei konventionellen Düsen kann die ausgegebene Volumenmenge über den Druck des flüssigen Mediums eingestellt werden. Allerdings ist die Änderung der ausgegebenen Volumenmenge nicht proportional zur Änderung des Drucks, da angenähert der vierfache Druck zur Verdoppelung des ausgegebenen Volumens benötigt wird.

Die DE 82 03 649 U1 offenbart ein Ventil zum Freigeben oder Absperren einer Kanalöffnung zur Spritzmittelzufuhr. Das Ventil weist eine Membran auf, die mit einer Feder gegen die Kanalöffnung vorgespannt ist, so dass die Membran die Kanalöffnung gegenüber einer Ringkammer abdichtet. Bei Auftreten eines hinreichenden Spritzmitteldrucks in der Ringkammer hebt die Membran durch den Spritzmitteldruck von der Kanalöffnung ab und die Kanalöffnung wird freigegeben.

Die DE 25 40 454 A1 offenbart eine Vorrichtung zum Versprühen von Flüssigkeiten. Die Vorrichtung weist eine Verteilerkammer und eine Membran auf. Die Membran wird von einem Steuermedium gegen eine Mündung der Verteilerkammer gedrückt, wobei die Membran abhängig von einem Druck des Steuermediums die Mündung verschließt oder freigibt.

Mit der Erfindung soll eine Düse zum Versprühen von flüssigen Medien hinsichtlich einer Veränderbarkeit der ausgegebenen Flüssigkeitsmenge verbessert werden.

Erfindungsgemäß ist hierzu eine Düse zum Versprühen von flüssigen Medien, insbesondere Pflanzenschutzmittel und Flüssigdünger, mit einem Gehäuse, wobei das Gehäuse wenigstens einen Flüssigkeitseinlass, eine Austrittskammer und wenigstens eine mit der Austrittskammer in Strömungsverbindung stehende Austrittsöffnung aufweist, vorgesehen, bei der zwischen dem Flüssigkeitseinlass und der Austrittsöffnung ein Ventil mit veränderbarem Strömungswiderstand angeordnet ist, wobei der Strömungswiderstand des Ventils vom Flüssigkeitsdruck abhängig ist.

Durch Vorsehen eines Ventils mit veränderbarem Strömungswiderstand, insbesondere mit veränderbarem Durchlassquerschnitt, lässt sich das von der Düse ausgegebene Flüssigkeitsvolumen über den Druck der zu versprühenden Flüssigkeit stärker beeinflussen als bei konstantem Strömungswiderstand bzw. Durchlassquerschnitt. Insbesondere lässt sich eine annähernd proportionale Abhängigkeit der ausgegebenen Flüssigkeitsmenge vom Flüssigkeitsdruck erzielen. Mit der erfindungsgemäßen Düse kann dadurch bei einer moderaten Druckerhöhung eine stärkere Änderung der ausgegebenen Flüssigkeitsmenge erzielt werden als bei konventionellen Düsen. Die erfindungsgemäße Düse ist daher besonders für die Landtechnik und speziell die Ausgabe von Flüssigdünger oder Pflanzenschutzmittel geeignet.

Gemäß der Erfindung weist das Ventil eine Federscheibe auf, wobei die Federscheibe von dem zu versprühenden flüssigen Medium beaufschlagbar ist.

Auf diese Weise lässt sich ein Strömungswiderstand bzw. ein Durchlassquerschnitt des Ventils in einfacher Weise beeinflussen. Die Federscheibe muss dabei nicht unbedingt den Durchlassquerschnitt der Durchlassöffnung selbst begrenzen, es genügt, wenn die Federscheibe beispielsweise stromabwärts der Durchlassöffnung eine Umlenkung verursacht, wobei diese Umlenkung dann vom Flüssigkeitsdruck abhängig ist. Im Ergebnis wird durch die Federscheibe die Strömung durch das Ventil mehr oder weniger gedrosselt und damit der Strömungswiderstand des Ventils verändert. Die Federscheibe kann plan oder gekrümmt ausgebildet sein. Die Materialeigenschaften der Federscheibe, speziell die Werkstoffauswahl für die Federscheibe, sowie die Stärke der Federscheibe und ggf. deren Krümmungsradius sind variable Parameter, um einen Volumenstrom durch die Düse in Abhängigkeit der Druckbeaufschlagung zu beeinflussen.

Gemäß der Erfindung ist in der Austrittskammer eine Blendenscheibe mit wenigstens einer Durchlassöffnung angeordnet, wobei die Federscheibe im Bereich eines stromabwärts liegenden Endes der Durchlassöffnung angeordnet ist. Die Anzahl und Größe der Durchlassöffnungen in der Blendenscheibe sind variable Parameter, um den Volumenstrom durch die Düse in Abhängigkeit der Druckbeaufschlagung zu beeinflussen.

Vorteilhafterweise ist die Federscheibe an einer stromabwärts liegenden Seite der Blendenscheibe befestigt und ist in Strömungsrichtung durch die Durchlassöffnung gesehen nach dem stromabwärts liegenden Ende der Durchlassöffnung angeordnet.

Auch wenn damit die Federscheibe gar nicht in der Durchlassöffnung selbst angeordnet ist und auch nicht den Durchlassquerschnitt der Durchlassöffnung verändert, so bildet die Federscheibe doch einen Strömungswiderstand für die durch die Durchlassöffnung strömende Flüssigkeit aus. In Abhängigkeit der Stellung der Federscheibe und somit des Winkels der Umlenkung der Flüssigkeit durch die Federscheibe wird somit der Strömungswiderstand der Durchlassöffnung in Kombination mit der Umlenkung durch die Federscheibe beeinflusst und die durch das Ventil strömende Flüssigkeitsmenge kann beeinflusst werden. Letztendlich beeinflusst die Federscheibe damit den freien Durchlassquerschnitt des gesamten Ventils. Die Federscheibe kann plan sein und die Durchlassöffnung im drucklosen Zustand verschließen.

Bei einem vordefinierten Druck, abhängig von der Federkonstante, wird die Federscheibe dann ausgelenkt und gibt die Durchlassöffnung teilweise oder ganz frei. Die Federscheibe kann aber auch in geringem Abstand von der Durchlassöffnung angeordnet sein, so dass auch im drucklosen Zustand ein Durchfluss durch die Durchlassöffnung möglich ist. Bei stärkerem Druck ist die Federscheibe ausgelenkt und der Strömungswiderstand wird verringert.

In Weiterbildung der Erfindung weist die Federscheibe eine gekrümmte Form auf, wobei eine konvexe Seite der Federscheibe dem stromabwärts liegenden Ende der Durchlassöffnung zugewandt ist.

Die Federscheibe verschließt somit die Durchlassöffnung niemals vollständig, kann aber dadurch in sehr einfacher Weise stromabwärts der Durchlassöffnung angebracht werden. Die durch die Durchlassöffnung strömende Flüssigkeit trifft dann auf die konvexe Seite der Federscheibe auf und je nach dem anliegenden Flüssigkeitsdruck wird die Federscheibe mehr oder weniger stark ausgelenkt, so dass der sich ergebende Strömungswiderstand verändert. Im entspannten Zustand und ohne dass durch die Düse strömende Flüssigkeit die Federscheibe beaufschlagt, kann die Federscheibe von dem stromabwärts liegendem Ende der wenigstens einen Durchlassöffnung beabstandet sein.

In Weiterbildung der Erfindung ist die Federscheibe als metallische Scheibe ausgebildet.

Mittels metallischer Scheiben können im Unterschied zu elastischen Gummischeiben oder Dichtungsscheiben wesentlich höhere Steifigkeitswerte erzielt werden, wie sie beim Einsatz in der erfindungsgemäßen Düse vorteilhaft sind.

In Weiterbildung der Erfindung ragt ein äußerer Rand der Federscheibe frei in die Austrittskammer vor.

Ein äußerer Rand der Federscheibe ist in Folge dessen nicht eingespannt und die Federscheibe kann durch den Flüssigkeitsdruck der Flüssigkeit, mit der sie beaufschlagt wird, in Folge dessen ausgelenkt werden und dadurch einen Strömungsquerschnitt durch Durchgangsöffnungen vergrößern oder verkleinern.

In Weiterbildung der Erfindung ist die Federscheibe in ihrem Mittenbereich eingespannt.

Auf diese Weise kann der äußere Rand der Federscheibe sowie die innerhalb des äußeren Rands liegenden und nicht eingespannten Abschnitte der Federscheibe symmetrisch ausgelenkt werden. Darüber hinaus ist die Befestigung der Federscheibe konstruktiv einfach und kann beispielsweise mittels einer einfachen Schraube vorgenommen werden.

In Weiterbildung der Erfindung ist die Federscheibe so angeordnet, dass sie auf beiden Seiten zumindest abschnittsweise von einem zu versprühenden flüssigen Medium beaufschlagt ist.

Auf diese Weise hängt die Auslenkung der Federscheibe nur vom dynamischen Druck oder Fließdruck des zu versprühenden Mediums und nicht von einem statischen Druck innerhalb der Austrittskammer oder innerhalb des Gehäuses der Düse ab. Eine Veränderung des freien Strömungsquerschnitts in der Düse kann somit ausschließlich in Abhängigkeit vom dynamischen Druck der durch die Düse strömenden Flüssigkeit erfolgen.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen. Einzelmerkmale der unterschiedlichen, in den Zeichnungen dargestellten und der Beschreibung beschriebenen Ausführungsformen lassen sich dabei in beliebiger Weise und auch ohne die weiteren Einzelmerkmale, mit denen sie im Zusammenhang gezeigt oder beschrieben sind, kombinieren, ohne den Rahmen der Erfindung zu überschreiten. In den Zeichnungen zeigen:
- Fig. 1: eine Schnittansicht einer erfindungsgemäßen Düse gemäß einer ersten Ausführungsform und
- Fig. 2: eine vergrößerte Darstellung der Einzelheit A aus Fig. 1.

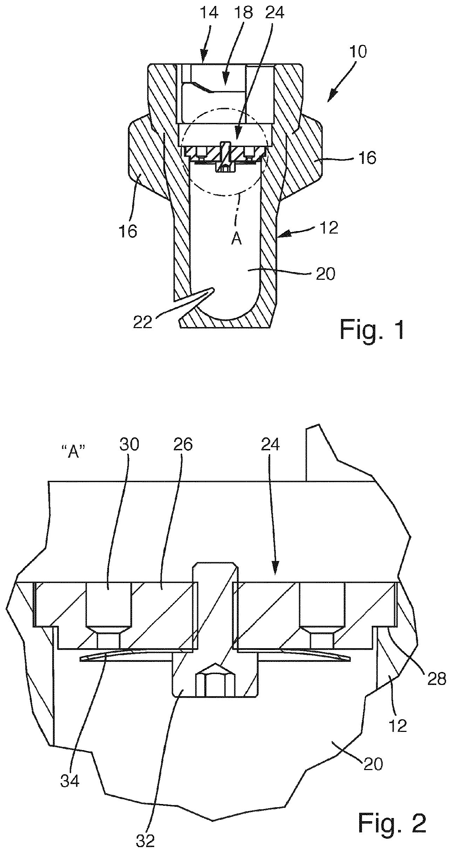

Die Darstellung der Fig. 1 zeigt eine erfindungsgemäße Düse 10 mit einem Düsengehäuse 12. Das Düsengehäuse 12 ist dafür vorgesehen, mit einer Anschlussausbildung 14, die nach Art eines Bajonettverschlusses ausgebildet ist, an einen Düsenträger angesetzt zu werden, der dann wiederum mit einer ebenfalls nicht dargestellten Spritzleitung verbunden ist. Beispielsweise kann die Spritzleitung Teil einer sogenannten Feldspritze sein und je nach vorgesehenem Anwendungsfall werden unterschiedliche Düsen 10 an die Düsenträger an der Spritzleitung angesetzt. Um das Aufsetzen der Düse 12 auf den Düsenträger zu erleichtern, ist das Düsengehäuse 12 mit Griffen 16 versehen.

Das Düsengehäuse 12 weist darüber hinaus einen Flüssigkeitseinlass 18 auf, über den zu versprühendes flüssiges Medium in das Düsengehäuse 12 hineinströmt. Über den Flüssigkeitseinlass 18 gelangt die zu versprühende Flüssigkeit in eine Austrittskammer 20, die dann mit einer Austrittsöffnung 22 versehen ist. Über die Austrittsöffnung 22 kann die zu versprühende Flüssigkeit dann in Form eines Spritzstrahls in die Umgebung gelangen.

In der Austrittskammer ist ein Ventil 24 angeordnet, das in Abhängigkeit eines Drucks der zu versprühenden Flüssigkeit einen Strömungswiderstand verändert. Dadurch kann eine stärkere Abhängigkeit der ausgegebenen Flüssigkeitsmenge in Abhängigkeit des Drucks der zu versprühenden Flüssigkeit erzielt werden, als dies bei konventionellen Sprühdüsen ohne das Ventil 24 der Fall wäre. Speziell kann eine annähernd proportionale Abhängigkeit der ausgegebenen Flüssigkeitsmenge vom Flüssigkeitsdruck erzielt werden.

Wie anhand der Fig. 2 zu erkennen ist, weist das Ventil 24 eine Blendenscheibe 26 auf, die an einem umlaufenden Absatz 28 des Ventilgehäuses 12 aufliegt und in der Austrittskammer 20 angeordnet ist. Das Ventil 24 teilt die Austrittskammer 20 dadurch in einen stromaufwärts des Ventils 24 und einen stromabwärts des Ventils 24 liegenden Teil.

Die Blendenscheibe 26 weist insgesamt vier Durchlassöffnungen 30 auf, von denen in Fig. 2 lediglich zwei erkennbar sind. Die Durchlassöffnungen 30 sind in Umfangsrichtung gleichmäßig voneinander beabstandet und liegen mit ihren Mittellängsachsen auf einer Kreislinie. Die Durchlassöffnungen 30 weisen jeweils einen zylindrischen Eingangsabschnitt, eine Verjüngung in Form eines kegelstumpfförmigen Abschnitts und einen zylindrischen Ausgangsabschnitt auf, der dann gegenüber dem Einlassabschnitt einen kleineren Durchmesser aufweist. Die Anzahl und Anordnung der Durchlassöffnungen 30 kann im Rahmen der Erfindung beliebig gewählt werden.

Auf einer stromabwärts liegenden Seite der Blendenscheibe 26, in Fig. 2 also unten, ist mittels einer Schraube 32 eine Federscheibe 34 so angeordnet, dass die Federscheibe den stromabwärts liegenden Enden der Durchlassöffnungen 30 gegenüberliegt. Die Federscheibe 34 ist ebenfalls kreisförmig. Die Federscheibe 34 liegt aber nur mit einem Teil ihres Radius flächig an der Unterseite der Blendenscheibe 26 an. Die Federscheibe 34 ist gekrümmt, wobei die konvexe Seite der Federscheibe 34 der Unterseite der Blendenscheibe 26 zugewandt ist. Im Rahmen der Erfindung kann die Federscheibe auch flach sein und an der Unterseite der Blendenscheibe flächig anliegen. Im Bereich der stromabwärts liegenden Enden der Durchlassöffnungen 30 ist die Federscheibe 34 dadurch bereits von der Unterseite der Blendenscheibe 26 beabstandet. Dennoch stellt die Federscheibe 34 eine Umlenkung für das durch die Durchlassöffnungen 30 strömende flüssige Medium dar, dergestalt, dass durch die Durchlassöffnungen 30 strömende Flüssigkeit radial nach außen abgelenkt wird. Ein Strömungspfad durch die Durchlassöffnungen 30 weist somit einen im Zustand der Fig. 2 vergleichsweise geringen Durchlassquerschnitt auf. Dieser Durchlassquerschnitt ergibt sich durch den Zwischenraum zwischen der Federscheibe 34 und der Unterseite der Blendenscheibe 26.

Wird nun ausgehend von dem in Fig. 2 dargestellten Zustand ein Druck der durch die Durchlassöffnungen 30 strömenden Flüssigkeit erhöht, so wird die Federscheibe 34 durch die auf sie auftreffende Flüssigkeit in Fig. 2 nach unten ausgelenkt. Dadurch vergrößert sich auch der Abstand zwischen der Federscheibe 34 und der Unterseite der Blendenscheibe 26 und damit der Durchlassquerschnitt des Strömungspfads durch das Ventil 24. Beispielsweise wird die Federscheibe 34 bei einem Anstieg des Wasserdrucks um 1 bar um 0,5 mm nach unten ausgelenkt. Dementsprechend verändert sich auch der Durchlassquerschnitt des Strömungspfads durch das Ventil 24 und dadurch auch der Strömungswiderstand des Ventils 24.

Sinkt der Flüssigkeitsdruck der durch die Durchlassöffnungen 30 strömenden Flüssigkeit wieder ab, federt die Federscheibe 34 wieder zurück in die in Fig. 2 dargestellte Stellung. Der Durchlassquerschnitt des Strömungspfads durch das Ventil 24 ist dadurch wieder verringert.

Das Ventil 24 lässt sich in sehr einfacher Weise auch bei bestehenden Düsenkonstruktionen nachrüsten. Wie aus Fig. 1 und Fig. 2 ersichtlich ist, ist in der Austrittskammer der Düse 10 ein umlaufender Absatz 28 für die Blendenscheibe 26 vorhanden, der bei konventionellen Düsen für andere Zwecke genutzt wird. Die Blendenscheibe 26 kann dann in sehr einfacher Weise in die Austrittskammer 20 der Düse 10 eingesetzt werden und konventionelle Düsen können umgerüstet werden beziehungsweise vorhandenen Formen von Düsengehäusen verwendet werden.

Unterschiedliche Charakteristika der Veränderung des Strömungswiderstands lassen sich beispielsweise durch eine Veränderung des Durchmessers der Durchlassöffnungen 30, eine andere Platzierung der Durchlassöffnungen 30 relativ zur Federscheibe 34 und eine Veränderung der Federeigenschaften der Federscheibe 34 erzielen.

## Patentansprüche

1. Düse zum Versprühen von flüssigen Medien, insbesondere Pflanzenschutzmittel und Flüssigdünger, mit einem Gehäuse (12), wobei das Gehäuse (12) wenigstens einen Flüssigkeitseinlass (18), eine Austrittskammer (20) und wenigstens eine mit der Austrittskammer (20) in Strömungsverbindung stehende Austrittsöffnung (22) aufweist, wobei zwischen dem Flüssigkeitseinlass (18) und der Austrittsöffnung (22) ein Ventil (24) mit veränderbarem Strömungswiderstand angeordnet ist, wobei der Strömungswiderstand des Ventils (24) vom Flüssigkeitsdruck abhängig ist, wobei das Ventil (24) eine Federscheibe (34) aufweist, wobei die Federscheibe (34) von dem zu versprühenden flüssigen Medium beaufschlagbar ist, **dadurch gekennzeichnet, dass** in der Austrittskammer (20) eine Blendenscheibe (26) mit wenigstens einer Durchlassöffnung (30) angeordnet ist, wobei die Federscheibe (34) im Bereich eines stromabwärts liegenden Endes der Durchlassöffnung (30) angeordnet ist.

2. Düse nach Anspruch 1, **dadurch gekennzeichnet, dass** die Federscheibe (34) an einer stromabwärts liegenden Seite der Blendenscheibe (26) befestigt ist und in Strömungsrichtung durch die Durchlassöffnung (30) gesehen nach dem stromabwärts liegenden Ende der Durchlassöffnung (30) angeordnet ist.

3. Düse nach einem der vorstehenden Ansprüche, **dadurch gekennzeichnet**, das die Federscheibe (34) eine gekrümmte Form aufweist, wobei eine konvexe Seite der Federscheibe (34) dem stromabwärts liegenden Ende der Durchlassöffnung (30) zugewandt ist.

4. Düse nach Anspruch 3, **dadurch gekennzeichnet, dass** die Federscheibe (34) im entspannten Zustand und ohne Beaufschlagung von durch die Durchlassöffnung hindurchtretendes flüssiges Medium von dem stromabwärts liegenden Ende der Durchlassöffnung beabstandet ist.

5. Düse nach einem der vorstehenden Ansprüche, **dadurch gekennzeichnet, dass** die Federscheibe eben ausgebildet ist und an der stromabwärts liegenden Seite der Blendenscheibe anliegt.

6. Düse nach einem der vorstehenden Ansprüche, **dadurch gekennzeichnet, dass** die Federscheibe (34) als metallische Scheibe ausgebildet ist.

7. Düse nach einem der vorstehenden Ansprüche, **dadurch gekennzeichnet, dass** ein äußerer Rand der Federscheibe (34) frei in die Austrittskammer (20) vorragt.

8. Düse nach einem der vorstehenden Ansprüche, **dadurch gekennzeichnet, dass** die Federscheibe (34) in ihrem Mittenbereich eingespannt ist.

9. Düse nach einem der vorstehenden Ansprüche, **dadurch gekennzeichnet, dass** die Federscheibe (34) so angeordnet ist, dass sie auf beiden Seiten zumindest abschnittsweise von einem zu versprühenden flüssigen Medium beaufschlagt ist, so dass eine Auslenkung der Federscheibe (34) nur von einem dynamischen Druck oder einem Fließdruck des zu versprühenden flüssigen Mediums und nicht von einem statischen Druck innerhalb der Austrittskammer (20) oder innerhalb des Gehäuses der Düse abhängt.

## Claims

1. Nozzle for spraying liquid media, in particular plant protection agents and liquid fertilizers, having a housing (12), wherein the housing (12) has at least one liquid inlet (18), an outlet chamber (20) and at least one outlet opening (22) in fluid connection with the outlet chamber (20), wherein a valve (24) of variable flow resistance is arranged between the liquid inlet (18) and the outlet opening (22), wherein the flow resistance of the valve (24) is dependent on the liquid pressure, wherein the valve (24) has a spring disc (34), wherein the spring disc (34) can be subjected to the liquid medium to be sprayed, **characterized in that** an orifice plate (26) having at least one passage opening (30) is arranged in the outlet chamber (20), wherein the spring disc (34) is arranged in the region of a downstream end of the passage opening (30).

2. Nozzle according to claim 1, **characterized in that** the spring disc (34) is secured on a downstream side of the orifice plate (26) and is arranged after the downstream end of the passage opening (30), when viewed in the flow direction through the passage opening (30).

3. Nozzle according to any of the preceding claims, **characterized in that** the spring disc (34) has a curved shape, wherein a convex side of the spring disc (34) faces the downstream end of the passage opening (30).

4. Nozzle according to claim 3, **characterized in that** the spring disc (34), in the relaxed state and without liquid medium passing through the passage opening applied to the spring disc, is spaced from the downstream end of the passage opening.

5. Nozzle according to any of the preceding claims, **characterized in that** the spring disc is of flat design and rests against the downstream side of the orifice plate.

6. Nozzle according to any of the preceding claims, **characterized in that** the spring disc (34) is a metallic disc.

7. Nozzle according to any of the preceding claims, **characterized in that** an outer edge of the spring disc (34) projects freely into the outlet chamber (20).

8. Nozzle according to any of the preceding claims, **characterized in that** the spring disc (34) is clamped in a central region thereof.

9. Nozzle according to any of the preceding claims, **characterized in that** the spring disc (34) is arranged such that a liquid medium to be sprayed is applied to the spring disc on both sides at least in sections, so that a movement of the spring disc (34) depends only on a dynamic pressure or a flow pressure of the liquid medium to be sprayed and does not depend on a static pressure within the outlet chamber (20) or within the housing of the nozzle.

## Revendications

1. Buse pour la pulvérisation de milieux liquides, notamment d'agents de protection des plantes et d'engrais liquides, munie d'un boîtier (12), le boîtier (12) comprenant au moins une entrée de liquide (18), une chambre de sortie (20) et au moins une ouverture de sortie (22) en connexion fluidique avec la chambre de sortie (20), une soupape (24) à résistance à l'écoulement modifiable étant agencée entre l'entrée de liquide (18) et l'ouverture de sortie (22), la résistance à l'écoulement de la soupape (24) étant dépendante de la pression de liquide, la soupape (24) comprenant une rondelle élastique (34), la rondelle élastique (34) pouvant être sollicitée par le milieu liquide à pulvériser, **caractérisée en ce qu'**un diaphragme (26) muni d'au moins une ouverture de passage (30) est agencé dans la chambre de sortie (20), la rondelle élastique (34) étant agencée dans la zone d'une extrémité située en aval de l'ouverture de passage (30).

2. Buse selon la revendication 1, **caractérisée en ce que** la rondelle élastique (34) est fixée sur un côté situé en aval du diaphragme (26) et est agencée, tel que vu dans la direction d'écoulement au travers de l'ouverture de passage (30), après l'extrémité située en aval de l'ouverture de passage (30).

3. Buse selon l'une quelconque des revendications précédentes, **caractérisée en ce que** la rondelle élastique (34) présente une forme incurvée, un côté convexe de la rondelle élastique (34) étant tourné vers l'extrémité située en aval de l'ouverture de passage (30).

4. Buse selon la revendication 3, **caractérisée en ce que** la rondelle élastique (34), à l'état détendu et sans sollicitation par le milieu liquide passant au travers de l'ouverture de passage, est espacée de l'extrémité située en aval de l'ouverture de passage.

5. Buse selon l'une quelconque des revendications précédentes, **caractérisée en ce que** la rondelle élastique est configurée sous forme plate et s'applique sur le côté situé en aval du diaphragme.

6. Buse selon l'une quelconque des revendications précédentes, **caractérisée en ce que** la rondelle élastique (34) est configurée sous la forme d'une rondelle métallique.

7. Buse selon l'une quelconque des revendications précédentes, **caractérisée en ce qu'**un bord extérieur de la rondelle élastique (34) dépasse librement dans la chambre de sortie (20).

8. Buse selon l'une quelconque des revendications précédentes, **caractérisée en ce que** la rondelle élastique (34) est tendue dans sa zone centrale.

9. Buse selon l'une quelconque des revendications précédentes, **caractérisée en ce que** la rondelle élastique (34) est agencée de telle sorte qu'elle soit sollicitée sur les deux côtés au moins en sections par un milieu liquide à pulvériser, de telle sorte qu'une déflexion de la rondelle élastique (34) ne dépende que d'une pression dynamique ou d'une pression d'écoulement du milieu liquide à pulvériser et ne dépende pas d'une pression statique à l'intérieur de la chambre de sortie (20) ou à l'intérieur du boîtier de la buse.
